# EUROPEAN PATENT APPLICATION

(11) **EP 2 557 828 A1**
(43) Date of publication of application: **13.02.2013**
(21) Application number: 11771601.9
(22) Date of filing: 23.04.2011
(51) Int. Cl.: H04W 8/22, H04W 76/02, H04W 88/02

(54) **METHOD FOR TRANSMITTING FILES AND RECEIVING FILES BASED ON MOBILE TERMINALS AND MOBILE TERMINAL**

(30) Priority: 23.04.2010 CN 201010154213
(71) Applicant: Huawei Device Co., Ltd., Longgang District Shenzhen Guangdong 518129 (CN)
(72) Inventor: CHEN, Lei, Shenzhen Guangdong 518129 (CN)
(74) Representative: Thun, Clemens
(86) International application number: PCT/CN2011/073219
(87) International publication number: WO 2011/131148

(57) **Abstract**

The present invention discloses a method for transmitting files and receiving files based on mobile terminals and a mobile terminal, relates to the technical field of communication and aims to simplify the user operation in the process of the file transmission between the mobile terminals and promote the satisfaction degree of user experience. The method for transmitting files based on the mobile terminals includes the following steps of: receiving a transmission command sent by a user, searching and obtaining a file designated by the command and the application state information of said file (S11); and establishing a connection with a target terminal and transmitting the file and the application state information to the target terminal (S12). The present invention can be used in the mobile terminals such as a mobile phone and the like.

## Description

This application claims the right of priority of Chinese patent application No. 201010154213.1, entitled "Method for Transmitting Files and Receiving Files Based on Mobile Terminals, and Mobile Terminal", and filed with the Chinese Patent Office on April 23, 2010, which is herein incorporated by reference in its entirety.

### Field of the Invention

The present invention relates to the technical field of communications, and particularly to methods for transmitting files and receiving files based on mobile terminals, and to mobile terminals.

### Background of the Invention

With the development of technologies, functions of mobile terminals such as mobile phones become increasingly stronger, and are capable of supporting a great variety of applications. Especially for smart mobile phones making use of open platforms, for instance, smart mobile phones enabled by the Android system (open source code operating system), the open platform enables a mobile phone to support great amounts of third-party applications, thereby greatly enriching user experience, as users always find applications such as new games, new desktops or new ringtones, etc., which are desirable for being experienced and used.

At present, it is usual to transmit application files or data amongst mobile phones via wireless transmission devices such as Bluetooth and WiFi (Wireless Fidelity). When a user wishes to obtain certain applications of other users, it is firstly necessary for the target mobile phone of the user to be wirelessly connected to source mobile phones of the other users, and then the target mobile phone copies and downloads application files from the source mobile phones, usually under a specific directory of the target mobile phone.

The inventor found at least the following problems in the prior art during the process of transmitting these files: insofar as the user is concerned, the current file transmission mode complicates operations, and the user of the target mobile phone has to perform additional application configuration for a received file on the target mobile phone in order to experience or use the application in the same way as the user of the source mobile phone does, whereby satisfaction of user experience is lowered. For instance, when user A likes a desktop wallpaper of user B, and wishes to use it on his own mobile phone, operations required of the two users include establishing connection between the target mobile phone and the source mobile phone, and copying and downloading a file, etc.. It is additionally necessary for user A to open the copied wallpaper file on his own target mobile phone, and to configure it as a wallpaper, only after which configuration it is possible for the mobile phone of user A to use the wallpaper like the mobile phone of user B. Moreover, since the current mode does not support transmission of application programs already installed by a third party, such as the APK (Android Package) application program of the Android system, if user A is interested in an application program of a game of user B, user A can only download from the mobile phone of user B the original installation program file, subsequently opens in his own mobile phone the transmitted installation program, and installs the program on his own, also only after which installation can it be possible for user A to experience the game on his own mobile phone in the same way as user B does. Thus, the current file transmission mode complicates operations and lowers satisfaction of user experience.

### Summary of the Invention

Embodiments of the present invention mainly aim to provide mobile terminals and methods for transmitting files and receiving files based on mobile terminals, whereby user operation for transmitting files between mobile terminals can be simplified, and satisfaction of user experience can be enhanced.

To achieve the above objectives, embodiments of the present invention employ the following technical solutions.

A method for transmitting a file based on a mobile terminal, which method comprises receiving a transmission command sent by a user, searching and obtaining a file designated by the command and application state information of the file; and establishing connection with a target terminal, and transmitting the file and the application state information to the target terminal.

A method for receiving a file based on a mobile terminal, which method comprises receiving a reception command sent by a user; establishing connection with a source terminal, receiving and storing a file and application state information of the file transmitted by the source terminal; and automatically performing application configuration of the file according to the application state information to equate application state of the file in the mobile terminal with application state of the file in the source terminal.

A mobile terminal, which comprises a transmission control unit and a transmission unit, of which the transmission control unit receives a transmission command sent by a user, searches and obtains a file designated by the command and application state information of the file, instructs the transmission unit to establish connection with a target terminal, and to transmit the file and the application state information to the target terminal; and the transmission unit establishes connection with the target terminal, and transmits the file and the application state information.

A mobile terminal, which comprises a transmission control unit and a transmission unit, of which the transmission control unit receives a reception command sent by a user, instructs the transmission unit to establish connection with a source terminal and to receive a file transmitted by the source terminal and application state information of the file, automatically performs application configuration of the file according to the application state information to equate application state of the file in the mobile terminal with application state of the file in the source terminal; and the transmission unit establishes connection with a target terminal, and receives the file and the application state information.

By employing the aforementioned technical solutions, the methods for transmitting files and receiving files based on mobile terminals, and mobile terminals provided by the embodiments of the present invention make it possible that, when application files are transmitted among mobile terminals of different users, the source terminal transmits application state information of a file at the same time of transmitting this file, whereby the target terminal is enabled to automatically perform application configuration of the file according to the received application state information, and it suffices for users to instruct the mobile terminals to transmit and receive files corresponding to the applications, while other processes such as configuring applications in the target terminal requires no participation of the user, as this can be automatically carried out by the mobile terminal. That is to say, a one-key-operation type file transmission mode among mobile terminals is enabled. Thus, user operation for transmitting files between mobile terminals is greatly simplified, and satisfaction of user experience is effectively enhanced.

### Brief Description of the Drawings

To make clearer the explanation of technical solutions of the embodiments of the present invention or of the prior art, accompanying drawings needed in the description of the embodiments or the prior art are briefly illustrated below. Apparently, the accompanying drawings illustrated below are directed to some embodiments of the present invention, and it is possible for persons ordinarily skilled in the art to deduce other drawings from these drawings without creative effort.
Fig. 1 is a flowchart illustrating the method for transmitting a file provided by embodiments of the present invention;
Fig. 2 is a flowchart of the first embodiment of the present invention;
Fig. 3 is a flowchart illustrating the method for receiving a file provided by embodiments of the present invention;
Fig. 4 is a flowchart of the second embodiment of the present invention;
Fig. 5 is a block diagram illustrating the structure of mobile terminal 1 provided by embodiments of the present invention;
Fig. 6 is a block diagram illustrating another structure of mobile terminal 1 provided by embodiments of the present invention;
Fig. 7 is a block diagram illustrating the structure of mobile terminal 2 provided by embodiments of the present invention; and
Fig. 8 is a block diagram illustrating another structure of mobile terminal 2 provided by embodiments of the present invention.

### Detailed Description of the Embodiments

The technical solutions according to the embodiments of the present invention are clearly and completely described below with reference to the drawings. Apparently, the embodiments as described below are merely partial, rather than entire, embodiments of the present invention. On the basis of the embodiments of the present invention, all other embodiments obtainable by persons ordinarily skilled in the art without creative effort shall all fall within the protection scope of the present invention.

Embodiments of the present invention aim to provide mobile terminals and methods for transmitting files and receiving files based on mobile terminals, whereby user operation for transmitting files between mobile terminals can be simplified, and satisfaction of user experience can be enhanced.

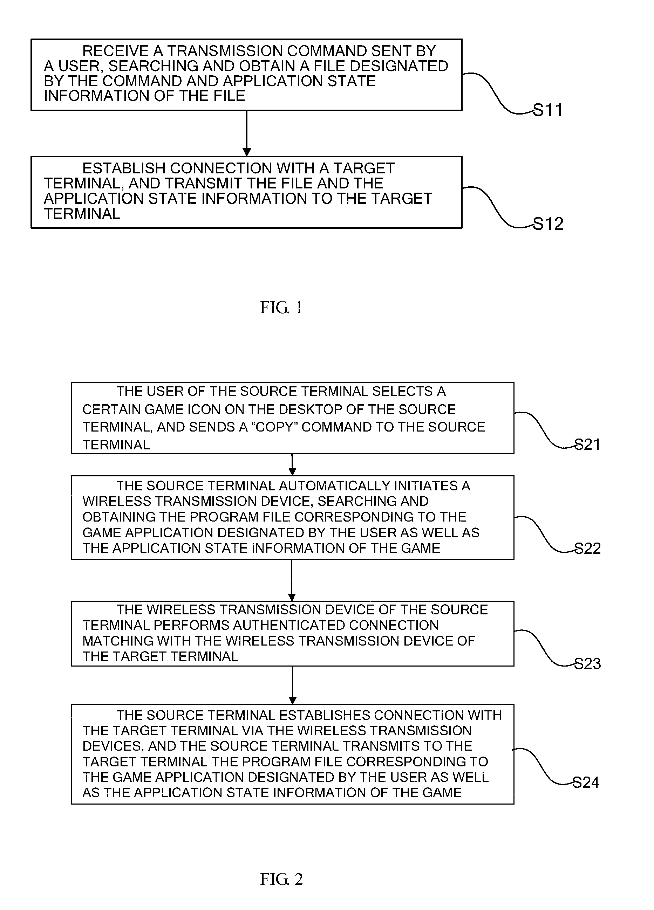

As shown by the flowchart of Fig. 1, the method for transmitting a file based on a mobile terminal provided by embodiments of the present invention includes the following steps.

S11 - receiving a transmission command sent by a user, searching and obtaining a file designated by the command and application state information of the file;

S12 - establishing connection with a target terminal, and transmitting the file and the application state information to the target terminal.

By virtue of the method for transmitting a file provided by embodiments of the present invention, the source terminal transmits application state information of an application file at the same time of transmitting this file, whereby the target terminal is enabled to automatically perform application configuration of the file according to the received application state information, without the need of manual configuration by the user of the target terminal; thus, operation of the target terminal is greatly simplified, and satisfaction of user experience is effectively enhanced. Moreover, insofar as the user of the source terminal is concerned, the method for transmitting a file provided by embodiments of the present invention makes it suffice for the user of the source terminal to instruct the source terminal to perform necessary file transmission, while other processes can be automatically carried out by the source terminal, thereby likewise simplifying operation by the user of the source terminal. That is to say, a one-key-operation type terminal file transmission mode of the user of the source terminal is enabled.

The source terminal can be enabled to regard by default that the command sent by a user by selecting a file icon means that the user wishes to transmit the file corresponding to the selected application. Moreover, the source terminal can be enabled to provide a transmittable application menu displayed on an operating interface. Thus, receiving a transmission command sent by a user in Step S11 includes receiving a command, sent by the user by selecting an application icon on an operating interface of the mobile terminal, for transmitting a file corresponding to the selected application; or receiving a command, sent by the user by selecting an option displayed in a transmittable application menu on an operating interface and provided by the mobile terminal, for transmitting a file corresponding to the selected application option.

That is to say, the user can find and select an application icon on the operating interface of the source terminal to send the command, and the source terminal will regard by default that the command sent by the user by selecting a file icon means that the user wishes to transmit the file corresponding to the selected application. It is of course also possible to find and select a file to be transmitted corresponding to the application under a root directory to send the command. Moreover, in the case no file is selected, the user may also select an application option in a transmittable application menu displayed on the operating interface and provided by the source terminal to send the command. For instance, the source terminal may display the following options by default to the user: 1. copy desktop; 2. copy ringtone; 3. copy skin... etc., that are some current and exclusive application configuration installation items of the source terminal. After the user selects a certain command option, the source terminal will regard by default that the user wishes to transmit the file corresponding to the selected application.

In general, sending a command by the user means that the user needs to transmit the file corresponding to the application instructed by the command.

The file as recited in Step S11 may be a file to which applications such as desktop wallpaper, ringtone, or an installed third-party application currently used by the source terminal and the like correspond, which has transmission permission, and which can be transmitted between mobile terminals. Of course, the file may as well be an ordinary text, picture and music stored in the source terminal.

The application state information is information indicative of the state of the application in the mobile terminal where it resides. For instance, if a file is configured as a desktop wallpaper in a source terminal, its application state information shows that the file is configured as a desktop wallpaper in the source terminal; if a file is configured as a ringtone in a source terminal, its application state information shows that the file is configured as a ringtone in the source terminal; as regards a installed third-party application in a source terminal, its application state information includes information on an installation path and icon display of corresponding application programs in the source terminal, whether a shortcut has been established, and the like; as regards an ordinary text, picture and music stored in a source terminal, the application state information may be null, and may also be a specific marker. The source terminal transmits the file corresponding to the application as well as the application state information to the target terminal, whereby the target terminal is enabled to automatically perform application configuration of the received file according to the state information, without the need of manual configuration by the user; thus, user operation is greatly simplified, and satisfaction of user experience is effectively enhanced.

Moreover, a step of recording a storage address of a file corresponding to an application in the mobile terminal is further included prior to Step S11. While transmitting a file and data, the source terminal can search, according to the storage address, the file corresponding to the application designated by the command. For instance, the source terminal will record in advance the addresses of files corresponding to the desktop wallpaper and the ringtone - i.e. after desktop configuration program and ringtone configuration program of the source terminal are executed, the source terminal has already recorded the storage address of a mirror file or original file of the desktop wallpaper and the storage address of the file corresponding to the ringtone. In Step S11, if the user instructs to transmit an application such as the desktop wallpaper or the ringtone, the source terminal will search the file corresponding to the desktop wallpaper or the ringtone via the recorded address information.

If the user instructs to transmit an installed third-party application, the source terminal searches an installation program file of the application under a recorded installation directory of the system according to an installation path of the system. For instance, in the case of a source terminal that uses the Android operating system, after the program is installed on the system, the source terminal stores an APK (Android Package) mirror file of the application program under a directory *"data"* in a section of *"userdata",* while there is no need for the original installation program. Therefore, the source terminal will search the APK mirror file of the application program corresponding to the application under the directory of *"data"* in Step S11.

As for the transmission of an ordinary file, under general circumstances, when the user sends a command, the source terminal is usually under a root directory that stores the file. Accordingly, it suffices in Step S11 to search and obtain the file corresponding to the application under this root directory.

Furthermore, in order to guarantee the security of mobile terminals and user information, when the source terminal searches and obtains the file designated by the command in Step S11, it is possible to firstly search the file designated by the command, and determine whether the file has transmission permission according to security attributes of the file; thereafter, when the file has transmission permission, the file as well as its application state information are obtained. If the file is not permitted for transmission, the user can be prompted and action can be stopped; for instance, the currently available Digital Rights Management (DRM, Digital Rights Management) mechanism can be used to process - if it is found that the file corresponding to the application to be transmitted as designated by the command is protected by DRM, it is not permitted for transmission.

In Step S12 the source terminal may establish connection with a target terminal via such transmission devices as Bluetooth or WiFi. Also in order to guarantee the security of mobile terminals and user information, prior to establishing a transmission link between the transmission device and the target terminal in Step S12, the transmission device of the source terminal and the transmission device of the target terminal should first pass authentication, such as passwords matching, according to a security management mechanism of Bluetooth or WiFi, and the transmission link can only then be established. Of course, the user may also provide the transmission devices with open permission, namely to dispense with the authenticating step and directly establish connection, whereby use is made convenient.

Moreover, after the transmission link is established, the source terminal will transmit the file to the target terminal. For instance, Step S12 may specifically include:
transmitting a file corresponding to a wallpaper application to the target terminal, and application state information configuring the file as the wallpaper; or
transmitting a file corresponding to a ringtone application to the target terminal, and application state information configuring the file as the ringtone; or
transmitting, to the target terminal, an installation program file corresponding to an installed third-party application, and application state information on installation path and icon display of the application and on whether a shortcut has been established.

In order to enable persons skilled in the art to better understand the technical solutions of the embodiments of the present invention, the embodiments of the present invention are described in greater detail below with reference to specific embodiments.

### First Embodiment

In the method provided in this embodiment for transmitting a file, the source terminal uses the Android operating system, and the user of the source terminal wants to transmit an installed third-party application to the user of a target terminal. The specific flow is as shown in Fig. 2 to include the following steps.

S21 - the user of the source terminal selects a certain game icon on the desktop of the source terminal, and sends a "copy" command to the source terminal.

The user selecting the game icon and sending the "copy" command to the source terminal in this step indicates that the user instructs the source terminal to transmit the program file corresponding to the selected game application. On receipt of the command, the source terminal operates as instructed by the command of the user. Of course, the command is preset in an operation menu of the source terminal, and the name of the command is not limited to "copy", but can be preset according to practical circumstances.

S22 - the source terminal automatically initiates a wireless transmission device, searches and obtains the program file corresponding to the game application designated by the user as well as the application state information of the game.

In this step, the source terminal automatically initiates the wireless transmission device, searches and obtains an APK mirror program file of the game application under a directory of *"data"* in a section of *"userdata".* Moreover, since the application is a third-party application installed within the source terminal, the source terminal will also obtain application state information on the installation path and icon display of the application, and on whether a shortcut has been established on the desktop.

S23 - authenticated connection matching is performed between the wireless transmission device of the source terminal and the wireless transmission device of the target terminal.

By virtue of the authenticated matching, this step prevents the source terminal from establishing connection with other unknown terminals, thus guaranteeing security of transmission.

S24 - connection is established between the source terminal and the target terminal via the wireless transmission devices, and the source terminal transmits to the target terminal the program file corresponding to the game application designated by the user as well as the application state information of the game.

The source terminal transmits to the target terminal the program file, namely the APK mirror file, corresponding to the game application instructed by the command of the user of the source terminal as well as the application state information of the game, wherein the application state information includes the installation path, icon display, and establishment of a shortcut on the desktop.

Through the foregoing steps in the method for transmitting a file according to this embodiment, the source terminal transmits application state information of the game at the same time of transmitting the game application file, whereby the target terminal is enabled to automatically install the game according to the received application state information, without the need of manual installation by the user of the target terminal; thus, user operation of the target terminal is greatly simplified, and satisfaction of user experience is effectively enhanced. Moreover, insofar as the user of the source terminal is concerned, this embodiment makes it suffice for the user of the source terminal to instruct the source terminal to transmit the game application, while other processes can be automatically carried out by the source terminal, thereby likewise simplifying operation by the user of the source terminal. That is to say, a one-key-operation type file transmission mode of the user of the source terminal is enabled.

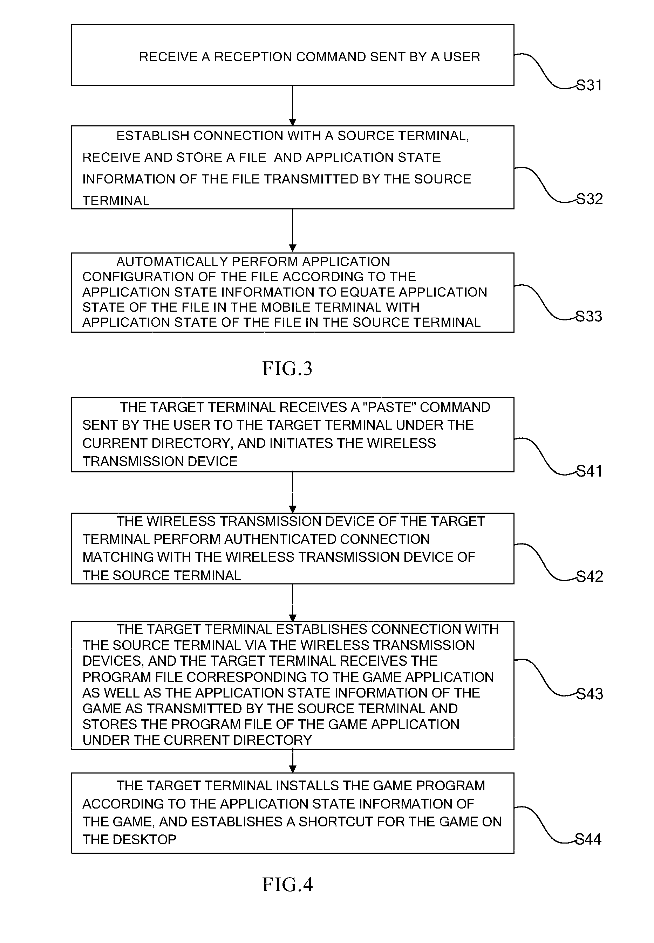

Correspondingly, embodiments of the present invention also provide a method for receiving a file based on a mobile terminal, which method comprises, as shown by the flowchart of Fig. 3, the following steps.

S31 - receiving a reception command sent by a user;

S32 - establishing connection with a source terminal, receiving and storing a file transmitted by the source terminal and application state information of the file; and

S33 - automatically performing application configuration of the file according to the application state information to equate application state of the file in the mobile terminal with application state of the file in the source terminal.

By virtue of the method provided by embodiments of the present invention for receiving a file, the target terminal can automatically perform application configuration of the file according to the received application state information, without the need of manual configuration by the user of the target terminal; thus, user operation of the target terminal is greatly simplified, and satisfaction of user experience is effectively enhanced. Moreover, it suffices for the user of the target terminal to instruct the target terminal to receive the file, while other processes can be automatically carried out by the target terminal. That is to say, a one-key-operation type terminal file transmission mode of the user of the target terminal is enabled.

The target terminal is enabled to recognize by default the current directory or interface in which the user resides when sending the command as the storage directory of the file corresponding to the received application. When it is impossible for the current directory to store the file, a corresponding prompt menu will be provided to the user. Thus, the command of the user in Step S31 instructing the target terminal to receive the application file and the application state information transmitted by the source terminal also indicates the storage directory of the received file, namely to store the file corresponding to the received application under the current directory at which the command is sent by the user.

The user may enter the directory desired for storage in the target terminal, and send the command to the target terminal, whereupon the target terminal will store the received file under the directory. When it is impossible for the current directory to store the file, for instance in a certain game interface, the target terminal will provide a corresponding prompt menu prompting the user to select a proper storage location, and store the file under the directory designated by the command of the user.

In Step S32 the target terminal may establish connection with the source terminal via wireless transmission devices such as Bluetooth or WiFi. In order to guarantee the security of mobile terminals and user information, while establishing connection with the source terminal via the wireless transmission device in Step S32, the wireless transmission device of the target terminal and the wireless transmission device of the source terminal should first pass authentication, such as passwords matching, according to a security management mechanism of Bluetooth or WiFi, and the transmission link can only then be established. Of course, the user may also provide the wireless transmission devices with open permission, namely to dispense with the authenticating step and directly establish connection, whereby use is made convenient.

The file received in Step S32 may be a file to which applications such as desktop wallpaper, ringtone, or an installed third-party application currently used by the source terminal and the like correspond, which has transmission permission, and which can be transmitted between mobile terminals. Of course, the file may as well be an ordinary text, picture and music stored in the source terminal.

The received application state information is information indicative of the state of the application in the mobile terminal where it resides. For instance, if a file is configured as a desktop wallpaper in a source terminal, its application state information shows that the file is configured as a desktop wallpaper in the source terminal; if a file is configured as a ringtone in a source terminal, its application state information shows that the file is configured as a ringtone in the source terminal; as regards an installed third-party application in a source terminal, its application state information includes information on an installation path and icon display of corresponding application programs in the source terminal, and on whether a shortcut has been established, and the like; as regards an ordinary text, picture and music stored in a source terminal, the application state information may be null, and may also be a specific marker.

In Step S33 the target terminal automatically performs application configuration according to the received application state information, without manual configuration by the user of the target terminal, and upon completion of the configuration the state of the file in the mobile terminal is equated with the application state of the file in the source terminal.

For example, when the state information shows that the received file is a file corresponding to the desktop wallpaper in the source terminal, the target terminal will configure the file as its own desktop wallpaper according to the state information.

When the state information shows that the received file is a file corresponding to the ringtone application in the source terminal, the target terminal will configure the file as its own ringtone according to the state information.

When the state information shows that the received file is a program file corresponding to the installed third-party application in the source terminal, the program file is installed according to the installation directory, display icon and information as to whether a shortcut has been established as included in the state information. Upon completion of the installation, the application in the target terminal and the application in the source terminal have the same installation path and the same icon as displayed on the interface. If a shortcut has been established for the application by the source terminal, a shortcut will also be established in the target terminal, and applications in the target terminal and the source terminal will have identical state.

Thus, there is no need for the user to manually perform any configuration operation after the file is received, thereby greatly simplifying user operation.

In order to enable persons skilled in the art to better understand the technical solutions of the embodiments of the present invention, the embodiments of the present invention are described in greater detail below with reference to specific embodiments.

### Second Embodiment

In the method provided in this embodiment for receiving a file, the target terminal uses the Android operating system, and receives a third-party game application program file transmitted from the source terminal; the method can be performed in cooperation with the method for transmitting a file as provided in the First Embodiment. The specific flow is as shown in Fig. 4 to include the following steps.

S41 - the target terminal receives a "paste" command sent by the user to the target terminal under the current directory, and initiates the wireless transmission device.

The target terminal having received this command indicates that the user instructs the target terminal to receive the game application program file transmitted by the source terminal as well as the state information of the file, and designates to store the file under the current directory in which the user sends the command. Of course, the command is preset in an operation menu of the target terminal, and the name of the command is not limited to "paste", but can be preset according to practical circumstances.

S42 - authenticated connection matching is performed between the wireless transmission device of the target terminal and the wireless transmission device of the source terminal.

By virtue of the authenticated matching, this step prevents the target terminal from establishing connection with other unknown terminals, thus guaranteeing security of transmission.

S43 - connection is established between the target terminal and the source terminal via the wireless transmission devices, and the target terminal receives the program file corresponding to the game application as well as the application state information of the game as transmitted by the source terminal, and stores the program file corresponding to the game application under the current directory.

The received state information shows the state of the game application in the source terminal, and includes information on the installation path and icon display of the program corresponding to the game application, the establishment of a shortcut on the desktop, and the like.

S44 - the target terminal installs the game program according to the application state information of the game, and establishes a shortcut for the game on the desktop.

In this step, the target terminal automatically installs the game application under the installation path instructed by the state information and sets the shortcut according to the received state information. The entire process is automatically carried out by the target terminal. Through the method for receiving a file provided in this embodiment, the state of the received game application in the target terminal is consistent with the state in the source terminal.

Thus, in the method provided in this embodiment for receiving a file, the target terminal automatically performs installation configuration of the file according to the received game application state information, without manual configuration by the user of the target terminal. Moreover, it is only needed for the user of the target terminal to send the reception command to the target terminal, or also needed to input password of the wireless transmission device, while other processes such as installing the game are all automatically carried out by the target terminal. That is to say, a one-key-operation type terminal file reception mode of the user of the target terminal is enabled. Furthermore, the received file has already been stored under the directory designated by the target user, and there is no need for subsequent manual processes of copying, pasting, and changing storage path. In summary, this embodiment greatly simplifies user operation of the target terminal, and effectively enhances satisfaction of user experience.

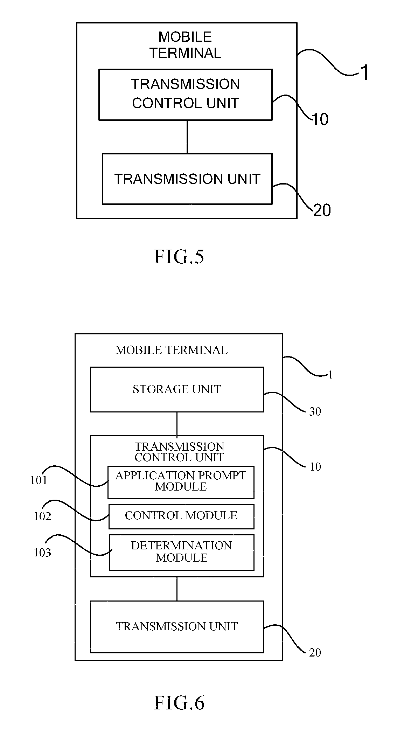

Embodiments of the present invention further provide a mobile terminal 1, which comprises, as shown in Fig. 5, a transmission control unit 10 and a transmission unit 20.

The transmission control unit 10 receives a transmission command sent by a user, searches and obtains a file designated by the command and application state information of the file, instructs the transmission unit 20 to establish connection with a target terminal, and to transmit the file and the application state information to the target terminal.

The transmission unit 20 establishes connection with the target terminal, and transmits the file and the application state information.

By virtue of the mobile terminal 1 provided in the embodiments of the present invention, when files are transmitted, the mobile terminal 1 transmits application state information of an application file at the same time of transmitting this file, whereby the target terminal is enabled to automatically perform application configuration of the file according to the received application state information, without manual configuration by the user of the target terminal. Thus, user operation of the target terminal is greatly simplified, and satisfaction of user experience is effectively enhanced. Moreover, it suffices for the user of the mobile terminal 1 to instruct the mobile terminal 1 to transmit the file, while other processes are all automatically carried out by the mobile terminal 1, and this likewise simplifies user operation of the mobile terminal 1. That is to say, a one-key-operation type terminal file transmission mode is enabled.

The mobile terminal 1 provided in the embodiments of the present invention may be a terminal having wireless transmission functions such as a mobile phone or a smart mobile phone, and transmits application files using the method as described above for transmitting a file.

The transmission control unit 10 may be preset in the mobile terminal 1 at the factory, may also be freely selected to be installed by the user, and can provide the user with an operating interface for file transmission.

The file as transmitted may be a file to which a desktop wallpaper, ringtone, or installed third-party application currently used by the mobile terminal 1 and the like correspond, and may as well be an ordinary text, picture and music stored in the source terminal. Generally speaking, the file corresponding to the application should have transmission permission, and can be transmittable between mobile terminals.

The application state information is information indicative of the state of the application in the mobile terminal where it resides. For instance, if a file is configured as a desktop wallpaper in a source terminal, its application state information shows that the file is configured as a desktop wallpaper in the source terminal; if a file is configured as a ringtone in a source terminal, its application state information shows that the file is configured as a ringtone in the source terminal; as regards an installed third-party application in a source terminal, its application state information includes information on an installation path and icon display of corresponding application programs in the source terminal, information as to whether a shortcut has been established, and the like; as regards an ordinary text, picture and music stored in a source terminal, the application state information may be null, and may also be a specific marker.

Moreover, as shown in Fig. 6, the mobile terminal 1 further comprises a storage unit 30 that stores storage address information of a file corresponding to a transmittable application in the mobile terminal 1. On receipt of the command from the user, the transmission control unit 10 searches the application file designated by the command according to the address information stored by the storage unit 30.

Furthermore, the transmission control unit 10 comprises an application prompt module 101 and a control module 102.

The application prompt module 101 obtains a transmittable application in the mobile terminal, and provides a user with a transmittable application menu displayed on an operating interface.

The control module 102 receives a command sent by the user by selecting an application icon on the operating interface of the mobile terminal 1, or receives a command sent by the user by selecting an application option on the application menu provided by the application prompt module 101, searches and obtains a file corresponding to the selected application icon or application option as well as application state information of the file, and instructs the transmission unit 20 to establish connection with a target terminal, and to transmit the file and the application state information to the target terminal.

Thus, when a user selects a certain application and sends a transmission command, the control module 102 recognizes by default that the user intends to transmit the file corresponding to the selected application; in the case no file is selected by the user and the transmission control unit 10 is initiated, the command can be sent through a transmittable application menu displayed on the operating interface and provided by the application prompt module 103. For instance, the following default option menu can be displayed to the user: 1. copy desktop; 2. copy ringtone; 3. copy skin... etc., that are some current and exclusive application configuration installation items. After the user selects a certain command option, this means that the user intends to transmit the file corresponding to the selected application.

Moreover, the control module 102 is also used to monitor configurations of various applications of the mobile terminal 1, obtain in advance storage addresses of files corresponding to the applications in the mobile terminal 1, and store the storage address information in the storage unit 30. After configuration programs of non third-party applications such as the desktop wallpaper and ringtone are executed, the control module 101 can record the addresses of the files corresponding to these non third-party applications, and store the addresses in the storage unit 30. While transmitting an application on receipt of a command from the user, the control module 102 searches the file corresponding to the application according to the addresses stored in the storage unit 30. As regards a third-party application, the corresponding installation program usually resides under a directory recognized by default by the system of the mobile terminal 1. For instance, in the case of a mobile terminal 1 that uses the Android operating system, after the program is installed on the system, a package APK mirror file of the application program will be stored under a directory of *"data"* in a section of *"userdata",* while there is no need for the original installation program. The control module 102 can also store this directory in the storage unit 30, and will search the APK mirror file of the application program corresponding to the application under the directory of *"data"* during transmission.

Moreover, the transmission control unit 10 further comprises a determination module 103 that determines whether the file designated to be transmitted by the command of the user has transmission permission according to security attributes of the file. The control module 101 firstly searches the file designated by the command, and the determination module 104 determines whether the file has transmission permission according to security attributes of the file. Thereafter, when the file has transmission permission, the file and the state information are obtained. If the file is not permitted for transmission, the user can be prompted and action can be stopped.

The transmission unit 20 may be a wireless transmission device such as Bluetooth or WiFi, and perform security management during file transmission with the help of currently available security management mechanism of Bluetooth or WiFi, which is not redundantly described here.

Moreover, in the mobile terminal 1 provided in the embodiments of the present invention, the transmission control unit 10 further receives a reception command sent by a user, instructs the transmission unit 20 to establish connection with a source terminal and to receive and store a file transmitted by the source terminal and application state information of the file, and automatically performs application configuration of the file according to the application state information to equate application state of the file in the mobile terminal with application state of the file in the source terminal.

The transmission unit 20 is further used to establish connection with the source terminal, and receive the file and the application state information.

Thus, when the mobile terminal 1 receives a file or data transmitted from other source terminal, the mobile terminal 1 can automatically perform application configuration of the file according to the received application state information, without manual configuration by the user of the mobile terminal 1, thereby greatly simplifying user operation, and effectively enhancing satisfaction of user experience. Moreover, it suffices for the user to instruct the target terminal to receive the file, while the other processes are all automatically carried out by the target terminal. That is to say, a one-key-operation type terminal file transmission mode by the user is enabled.

Exemplary explanation is made below for the operating method of the mobile terminal 1 provided by the embodiments of the present invention when it is embodied as a mobile phone.

Each of user A and user B uses a mobile phone provided by the embodiments of the present invention, user A wants to install a certain game on the mobile phone of user B, and user B has already installed the game and established a shortcut on the desktop. At this time, user B finds the icon of the game on the desktop of the mobile phone of user B, and sends a "copy" operation via a user interface provided by the transmission control unit 10, by which time the transmission control unit 10 of the mobile phone of user B receives a user command, initiates the transmission unit 20, and searches and obtains the program file corresponding to the game and the state information. The state information includes the installation directory of the game and the icon displayed on the mobile phone of user B, as well as information indicating that a shortcut has already been established on the desktop, and the like. At this time, user A sends a "paste" operation on the mobile phone of user A under a directory desired by user A for copying, through a user interface provided by the transmission control unit 10. The transmission control unit 10 of the mobile phone of user A receives a user command, initiates the transmission unit 20. Connection will be established between the transmission unit 20 of the mobile phone of user A and the transmission unit 20 of the mobile phone of user B - if authenticated matching is required, it is further necessary for user A and user B to input passwords for matching. Subsequently, after a transmission link is established, the transmission control unit 10 of the mobile phone of user B will instruct the transmission unit 20 to transmit to the mobile phone of user A the program file corresponding to the game and the application state information, and the transmission control unit 10 of the mobile phone of user A will instruct the transmission unit 20 to receive the program file corresponding to the game and the state information. The transmission control unit 10 of the mobile phone of user A recognizes by default that the current directory in which the user sends the command is the directory in which the received file is stored, stores the received program file under the current directory, installs the game according to the received state information upon completion of the reception, and establishes a shortcut on the desktop of the mobile phone of user A. Thus, the game program of user B will be automatically transmitted to the mobile phone of user A, and automatically installed.

As can be known from the above example, by the mobile terminal 1 provided by the embodiments of the present invention, it is merely necessary for the user to instruct the mobile terminal to transmit or receive the file, while other processes including subsequent installation and configuration will be automatically carried out by the mobile terminal. Moreover, the file can be directly stored under the desirable directory, without the need of subsequently changing the operation. That is to say, a one-key-operation type file transmission mode between mobile terminals is enabled. Thus, user operation for transmitting files between mobile terminals is greatly simplified, and satisfaction of user experience is effectively enhanced.

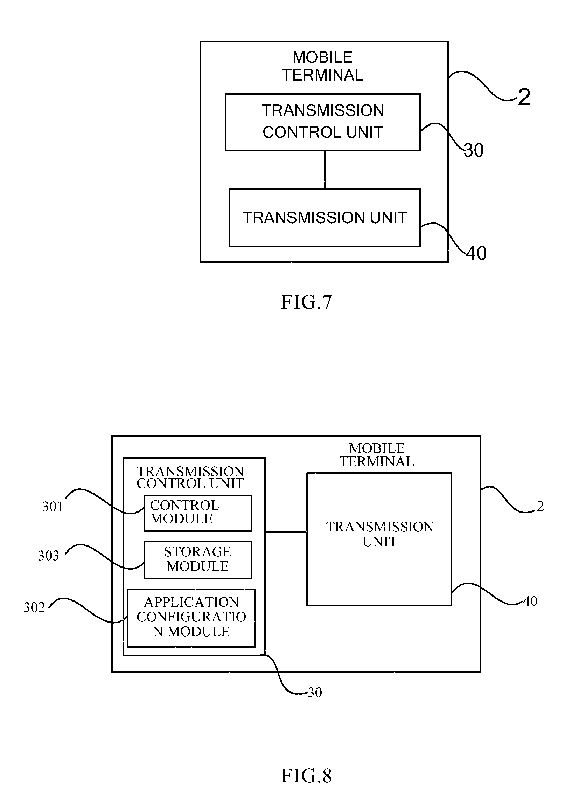

Correspondingly, embodiments of the present invention further provide a mobile terminal 2, which comprises, as shown in Fig. 7, a transmission control unit 30 and a transmission unit 40.

The transmission control unit 30 receives a reception command sent by a user, instructs the transmission unit 40 to establish connection with a source terminal and to receive and store a file transmitted by the source terminal and application state information of the file, automatically performs application configuration of the file according to the application state information to equate application state of the file in the mobile terminal with application state of the file in the source terminal.

The transmission unit 40 establishes connection with a target terminal, and receives the file and the application state information.

By virtue of the mobile terminal 2 provided in the embodiments of the present invention, when a file is received, the mobile terminal 2 can automatically perform application configuration of the file according to the received application state information, without manual configuration by the user of the mobile terminal 2. Thus, user operation is greatly simplified, and satisfaction of user experience is effectively enhanced. Moreover, it suffices for the user of the mobile terminal 2 to instruct the mobile terminal to receive the file, while other processes including the process of configuring the file are all automatically carried out by the mobile terminal 2. That is to say, a one-key-operation type file reception mode is enabled.

Moreover, the transmission control unit 30 is configured to recognize by default that the current directory in which the user sends the reception command is the directory in which the received file is stored; it is also possible to prompt the user, when the current directory instructed by the user cannot be used to store the file, for the user to select another storage directory, and it is also possible for the user to preset a directory for storing the received file.

Further, as shown in Fig. 8, the transmission control module 30 includes a control module 301 and an application configuration module 302.

The control module 301 receives a reception command sent by a user, instructs the transmission unit 40 to establish connection with a source terminal and to receive and store a file transmitted by the source terminal and application state information of the file.

The application configuration module 302 automatically performs application configuration of the file according to the application state information to equate application state of the file in the mobile terminal with application state of the file in the source terminal.

Furthermore, the transmission control unit 30 further includes a storage module 303 that stores the received application state information. The control module 301 stores the received application state information in the storage module 303, and the application configuration module 302 configures the file, for instance as a desktop, a ringtone, or by performing program installation thereof, according to the application state information stored in the storage module 303.

As can be understood by persons ordinarily skilled in the art, the entire or partial flows of the aforementioned method embodiments can be executed by a hardware relating to computer program instructions, and the program can be stored in a computer-readable storage medium and, when executed, execute the steps of the aforementioned method embodiments. The storage medium includes any media capable of storing program codes, such as a read-only memory (ROM), a random access memory (RAM), a magnetic disk, or an optical disk, etc.

The above described embodiments are merely specific embodiments of the present invention, and the protection scope of the present invention is not limited thereto, as any modification or substitution easily conceivable to persons skilled in the art within the technical scope disclosed in the present invention shall be covered by the protection scope of the present invention. Therefore, the protection scope of the present invention should be the protection scope of the attached claims.

## Claims

1. A method for transmitting a file based on a mobile terminal, comprising:
receiving a transmission command sent by a user, searching and obtaining a file designated by the command and application state information of the file; and
establishing connection with a target terminal, and transmitting the file and the application state information to the target terminal.

2. The method according to claim 1, prior to the step of receiving a transmission command sent by a user, comprises,
recording a storage address of a file corresponding to an application in the mobile terminal.

3. The method according to claim 1, wherein the step of receiving a transmission command sent by a user comprises:
receiving a command, sent by the user by selecting an application icon on an operating interface of the mobile terminal, for transmitting a file corresponding to an selected application; or
receiving a command, sent by the user by selecting an option displayed in a transmittable application menu on an operating interface and provided by the mobile terminal, for transmitting a file corresponding to an selected application option.

4. The method according to claim 1, wherein the step of searching and obtaining a file designated by the command and application state information of the file comprises:
searching the file designated by the command, and determining whether the file has transmission permission according to security attributes of the file; and
obtaining the file and the application state information of the file when the file has transmission permission.

5. The method according to claim 1, wherein the step of transmitting the file and the application state information to the target terminal comprises:
transmitting a file corresponding to a wallpaper application to the target terminal, and application state information for configuring the file as an wallpaper; or
transmitting a file corresponding to a ringtone application to the target terminal, and application state information for configuring the file as a ringtone; or
transmitting, to the target terminal, an installation program file corresponding to an installed third-party application, and an application state information on an installation path and icon display of the application and whether a shortcut has been established.

6. A method for receiving a file based on a mobile terminal, comprising:
receiving a reception command sent by a user;
establishing connection with a source terminal, receiving and storing a file and application state information of the file transmitted by the source terminal; and
automatically performing application configuration of the file according to the application state information to equate application state of the file in the mobile terminal with application state of the file in the source terminal.

7. The method according to claim 6, wherein the step of receiving and storing a file transmitted by the source terminal comprises:
receiving a file transmitted by the source terminal, and storing the file under a current directory in which the command is sent by the user or storing the file under a directory designated by a command of the user.

8. The method according to claim 6, wherein the step of automatically performing application configuration of the file according to the application state information to equate application state of the file in the mobile terminal with application state of the file in the source terminal comprises:
configuring the file as a wallpaper according to the application state information when the application state information shows that the received file is a file corresponding to a wallpaper application in the source terminal;
configuring the file as a ringtone when the state information shows that the received file is a file corresponding to a ringtone application in the source terminal; and
installing, when the state information shows that the received file is a program file corresponding to an installed third-party application in the source terminal, the program file according to an installation directory, a display icon and information whether to establish a shortcut included in the application state information.

9. A mobile terminal, comprising:
a transmission control unit and a transmission unit, wherein
the transmission control unit receives a transmission command sent by a user, searches and obtains a file designated by the command and application state information of the file, instructs the transmission unit to establish connection with a target terminal, and to transmit the file and the application state information to the target terminal; and
the transmission unit establishes connection with the target terminal, and transmits the file and the application state information.

10. The mobile terminal according to claim 9, further comprising a storage unit that stores storage address information of a file corresponding to a transmittable application in the mobile terminal.

11. The mobile terminal according to claim 9, wherein the transmission control unit comprises an application prompt module and a control module; wherein
the application prompt module obtains a transmittable application in the mobile terminal, and provides a user with a transmittable application menu and displayed on an operating interface; and
the control module receives a command sent by the user by selecting an application icon on the operating interface of the mobile terminal, or receives a command sent by the user by selecting an application option on the transmittable application menu provided by the application prompt module, searches and obtains a file corresponding to the selected application icon or application option as well as application state information of the file, and instructs the transmission unit to establish connection with a target terminal, and to transmit the file and the application state information to the target terminal.

12. The mobile terminal according to claim 9, wherein the transmission control unit further comprises a determination module that determines whether the file instructed by the command of the user to be transmitted has transmission permission according to security attributes of the file.

13. The mobile terminal according to claim 9, wherein
the transmission control unit further receives a reception command sent by a user, instructs the transmission unit to establish connection with a source terminal and to receive and store a file and application state information of the file transmitted by the source terminal, automatically performs application configuration of the file according to the application state information to equate application state of the file in the mobile terminal with application state of the file in the source terminal; and
the transmission unit further establishes connection with the source terminal, and receives the file and the application state information.

14. A mobile terminal, comprising:
a transmission control unit and a transmission unit, wherein
the transmission control unit receives a reception command sent by a user, instructs the transmission unit to establish connection with a source terminal and to receive a file and application state information of the file transmitted by the source terminal, automatically performs application configuration of the file according to the application state information to equate application state of the file in the mobile terminal with application state of the file in the source terminal; and
the transmission unit establishes connection with a target terminal , and receives the file and the application state information.

15. The mobile terminal according to claim 14, wherein the transmission control unit comprises a control module and an application configuration module, wherein
the control module receives a reception command sent by a user, instructs the transmission unit to establish connection with a source terminal and to receive and store a file and application state information of the file transmitted by the source terminal, and stores the file under a current directory in which the command is sent by the user or under a directory designated by a command of the user; and
the application configuration module automatically performs application configuration of the file according to the application state information to equate application state of the file in the mobile terminal with application state of the file in the source terminal.
